# EUROPEAN PATENT SPECIFICATION

(11) **EP 2 447 330 B1**
(45) Date of publication and mention of the grant of the patent: **13.02.2013**
(21) Application number: 11183208.5
(22) Date of filing: 29.09.2011
(51) Int. Cl.: C09J 7/02, C09J 133/08

(54) **Clean removable adhesive sheet**
Sauber entfernbares Haftblatt
Feuille adhésive amovible propre

(30) Priority: 26.10.2010 CN 201010539470
(43) Date of publication of application: 02.05.2012
(73) Proprietor: Rohm and Haas Company, Philadelphia, Pennsylvania 19106-2399 (US)
(72) Inventor: Mao, Zhigiang, Shanghai (CN); Yang, Huixian, Pudong Shanghai (CN); Qu, Zhaohui, Shanghai (CN); Yang, Miao, 1047 Shanghai 2-301 (CN); Xue, Yin, Shanghai (CN)
(74) Representative: Buckley, Guy Julian

(56) References cited:
- EP-A1- 1 528 091
- EP-A2- 1 340 797
- DATABASE WPI Week 200825 Thomson Scientific, London, GB; AN 2008-D40183 XP002670207, & JP 2007 245389 A (NITTO DENKO CORP) 27 September 2007 (2007-09-27)

## Description

### Background

This invention relates generally to a clean removable adhesive sheet consisting of polyvinyl chloride (PVC) film and back coating of water-based pressure sensitive adhesive (PSA), wherein the PVC film is applied without corona treatment. The adhesive sheet exhibits improved anchorage between the PSA and the PVC film.

Traditional solvent-based PSAs endow adhesive sheet products with clean removal property in graphic poster application. The PSA can be strongly anchored on the PVC film so that the PSA is completely removed with the PVC film from the surface it is adhered to. Such property that the anchorage between the PSA and its supporting film is sufficiently stronger than the adhesion between the PSA and the surface it is adhered to, which results in a complete removal of the PSA from the surface when the PVC film is peeled off, is herein denoted as "clean removal". When backed with a solvent PSA, the organic supporting film (usually PVC) is inevitably etched by the solvent in the PSA which thereby enhances the anchorage between the PSA and the supporting film. No additional treatment is needed before making laminates for satisfactory clean removal performance using solvent-based adhesives. However, water-based PSA is usually poor in this property due to lack of solvent etching. A corona treatment has to be applied to the PVC film to meet the clean removal requirement. The corona treatment becomes more necessary when the PVC film is low quality, for example, some highly monomeric plasticized PVC films, which is prone to have poorer anchorage between the PSA and the PVC film. This increases the equipment investment and energy cost for the adhesive sheet producer.

US 3,232,785A describes a PSA tape or sheet material with improved anchorage by coating an interposed adhesive primer layer between vinyl film and PSA, which firmly anchors the adhesive to the film backing so as to permit the tape or sheet material to be unwound from roll form over wide temperature ranges without transfer or offsetting of the adhesive. However, there still a desire to explore a simple solution in which the anchorage of the PSA and the PVC backing can be significantly improved by adjusting the PSA composition and without the primer layer or other pre-treatment. Such technique could benefit customer with less equipment investment, lower energy cost and less air pollution of solvent.

EP51169A provides polyacrylate dispersions for pressure sensitive adhesives by copolymerization of 70 to 92wt% acrylic acid C4-C8-alkylester, 5 to 15wt% (meth)acrylonitrile, 1 to 5 wt% unsaturated mono- or di-carboxylic acids with C3-C6 or corresponding dicarboxylic acids mono- C1-C20-alkylesters, and 0 to 20 wt% other copolymerizable compounds in aqueous emulsion in presence of an initiator and an emulsifier, characterized in that 0.1 to 1.5wt% anionic emulsifier, 0.1 to 1.0wt% alkali metal disulphite, alkali metal hydrogen sulphite or sulphur dioxide, and 0.75 to 2.0wt% peroxodisulphate, ammonium or alkali metal salt, are used. The reference teaches a method to improve cohesion of the adhesive film by reducing the amount of emulsifier from 3 to 5wt% to 0.1 to 1.5wt% and without creating an internal or external crosslinking of the polyacrylate. However, the inventors of the present invention have found that the polyacrylate dispersion of EP51169A using at least 70wt% acrylic acid C4-C8-alkylester, such as 2-ethylhexyl acrylate, cannot perform with balanced properties of tack, peel, plasticizer migration resistance (PMR) and removability.

The problem addressed by this invention is to find a PVC film backed with water based PSA, which exhibits high anchorage between the PSA and the PVC film without any pre-treatment on the PVC film. The PSA used in PVC film can provide balanced adhesive performances, including tack, peel/peel build, PMR and removability in graphic poster application.

### Statement of Invention

The present invention is directed to a polyvinyl chloride film backed with water based pressure sensitive adhesive, wherein said pressure sensitive adhesive comprises a copolymer by copolymerization of a monomer mixture comprising, in percentage by weight based on the dry weight of the copolymer,
a) from 30wt% to less than 70wt% acrylic acid C4-C8-alkylester, and
b) from 2wt% to 9wt% (meth)acrylonitrile,
wherein the polyvinyl chloride film is not corona treated.

### Detailed Description

For the purpose of describing the components in the compositions of this invention, all term comprising parentheses denote either or both of the included parenthetical matter and its absence. For example, the term "(meth)acrylate" means acrylate, methacrylate, and mixtures thereof, and the phrase "(meth)acrylic" used herein means acrylic, methacrylic, and mixtures thereof the phrase "(meth)acrylonitrile" used herein means acrylonitrile, methacrylonitrile and mixtures thereof.

As used herein, the term "water based" or "aqueous" shall mean water or water mixed with 50wt% or less, preferable less, based on the weight of the mixture, of water-miscible solvent.

As used herein, the term "polyvinyl chloride film" or "PVC film" refers to a film which is composed of polyvinyl chloride and plasticizer in the whole piece of the film or at least on the surface coated or contacted with an adhesive.

As used herein, the term "wt%" shall mean percent by weight.

All ranges recited are, unless otherwise indicated, inclusive and combinable. For example, an amount of 1wt% or more, or 2wt% or more, or 4wt% or more and up to 20wt%, or up 15wt%, will include ranges of 1wt% or more to 20wt% or less, 1wt% or more to 15wt% or less, 2wt% or more to 15wt% or less, 2wt% or more to 20wt% or less, 4wt% or more to 15wt% or less, and 4wt% or more to 20wt% or less.

- The copolymer in the PSA comprises, as copolymerized unit and based on the total dry weight of the copolymer, from 30wt% to less than 70wt%, alternatively from 40wt% to less than 66.5wt%, alternatively from 50wt% to less than 63wt%, alternatively from 60wt% to less than 62wt%, at least one acrylic acid C4-C8-alkylester. Suitable acrylic acid C4-C8-alkylester monomers include, for example, (meth)acrylic C4-C8-alkylester monomers such as n-butyl (meth)acrylate, isobutyl (meth)acrylate, hexyl (meth)acrylate, 2-ethylhexyl (meth)acrylate, and mixtures thereof.

The copolymer comprises, as copolymerized unit and based on the total dry weight of the copolymer, from 2wt% to 9wt%, alternatively from 3wt% to 8wt%, alternatively from 4wt% to 7wt%, (meth)acrylonitrile. Suitable (meth)acrylonitrile monomers include, but are not limited to acrylonitrile, methacrylonitrile, and mixtures thereof.

The copolymer optionally comprises, as copolymerized unit and based on the total dry weight of the copolymer, from 0.1 to 50wt%, alternatively from 10 to 40wt%, alternatively from 20 to 30wt%, acrylic acid C1-C3-alkylester. Suitable acrylic acid C1-C3-alkylester monomers include, for example, methyl (meth)acrylate, ethyl (meth)acrylate, propyl (meth)acrylate, hydroxypropyl (meth)acrylate, isopropyl (meth)acrylate, hydroxyethyl (meth)acrylate, methoxyethyl (meth)acrylate, and mixtures thereof.

The copolymer optionally comprises, as copolymerized unit and based on the total dry weight of the copolymer, from 0.1 to 10wt%, alternatively from 0.1 to 5wt%, alternatively from 0.1 to 2wt%, a monomer carrying at least one amide group. Suitable monomers carrying at least one amide group include, for example, acrylamide, methacrylamide, and mixtures thereof.

The copolymer optionally comprises, as copolymerized unit and based on the total dry weight of the copolymer, from 0.1 to 10wt%, alternative from 0.1 to 5wt%, alternatively from 0.1 to 3wt%, a monomer carrying at least one carboxyl or carboxylic anhydride group. Suitable monomers carrying at least one carboxyl group include carboxylic acid monomers, for example, (meth)acrylic acid, itaconic acid, maleic acid, and fumaric acid; carboxylic acid C1-C20-alkylester monomers, for example, isononyl (meth)acrylate and lauryl (meth)acrylate; and mixtures thereof. Suitable monomers carrying at least one carboxylic anhydride group include, for example, maleic anhydride.

The copolymer optionally comprises, as copolymerized unit and based on the total dry weight of the copolymer, from 0.1 to 10wt%, alternative from 0.1 to 5wt%, alternatively from 0.1 to 3wt%, a monomer carrying at least one hydroxyl group. The monomers carrying at least one hydroxyl group include, for example, 2-hydroxyethyl (meth)acrylate, hydroxypropyl (meth)acrylate and mixtures thereof.

The copolymer optionally comprises, as copolymerized unit and based on the total dry weight of the copolymer, from 0.1 to 10wt%, alternatively from 0.1 to 5wt%, alternatively from 0.1 to 3wt%, a styrenic monomer. As used herein, the term "styrenic monomer" refers to a monomer containing a molecular structure of styrene or any of its derivatives. Suitable styrenic monomers include, for example, styrene, methyl styrene, vinyl toluene, methoxy styrene, butyl styrene, chlorostyrene, and mixtures thereof.

The emulsion polymerization techniques used to prepare the aqueous copolymer dispersion for the water based PSA are well known in the art such as, for example, the processes as disclosed in U.S. Patents No. 4,325,856; 4,654,397; 5314943 and 4,814,373. Conventional surfactants may be used such as, for example, anionic and/or nonionic emulsifiers such as, for example, alkali metal or ammonium alkyl sulfates, alkyl sulfonic acids, fatty acids, and oxyethylated alkyl phenols. The amount of surfactant used is usually 0.1% to 6% weight, based on the weight of total monomer. Either thermal or redox initiation processes may be used. Conventional free radical initiators may be used such as, for example, hydrogen peroxide, t-butyl hydroperoxide, t-amyl hydroperoxide, ammonium and/or alkali persulfates, typically at a level of 0.01% to 3.0% by weight, based on the weight of total monomer. Redox systems using the same initiators coupled with a suitable reductant such as, for example, sodium hydrosulfite, isoascorbic acid, hydroxylamine sulfate and sodium bisulfite may be used at similar levels, optionally in combination with metal ions such as, for example iron and copper, optionally further including chelating agents for the metal. Chain transfer agents such as mercaptans may be used to adjust the molecular weight of the copolymers. The monomer mixture may be added neat or as an emulsion in water. The monomer mixture may be added in a single addition or in multiple additions or continuously over the reaction period using a uniform or varying composition. Additional ingredients such as, for example, free radical initiators, oxidants, reducing agents, chain transfer agents, neutralizers, surfactants, and dispersants may be added prior to, during, or subsequent to any of the stages. Processes yielding polymodal particle size distributions such as those disclosed in US Patents No. 4,384,056 and 4,539,361, for example, may be employed.

In another embodiment, the aqueous emulsion copolymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. Each of the stages of the multi-staged emulsion polymer may contain monomers, surfactants, chain transfer agents, etc. selected from those disclosed hereinabove for the emulsion polymer. For a multi-staged emulsion polymer, the copolymerized monomer content shall be determined from the overall composition of the emulsion polymer without regard for the number of stages or phases therein. The polymerization techniques used to prepare such multistage emulsion polymers are well known in the art such as, for example, US Patents No. 4,325,856; 4,654,3397; and 4,814,373.

The average size of the copolymer particles in the emulsion is also an important factor of the inventive PSA and should be within the range of 60 to 500 nm, preferably 100 to 400 nm, more preferably 120 to 250 nm.

The copolymer constituting the PSA according to the present invention has a glass transition temperature of not higher than 0°C, preferably in the range of -50°C to -20°C.

For increasing the opacity of the clean removable adhesive sheet, a pigment is preferably added as a filler in an amount of 0.5 to 20% by weight, more preferably 1 to 10% by weight, based on the solids weight of the copolymer emulsion. As the pigment to be used as filler, there may be mentioned organic hollow sphere particle, such as Ropaque™ Ultra-E polymer from The Dow Chemical Company; or inorganic materials such as kaolin, talc, clay, titanium oxide, calcium oxide, calcium hydroxide, calcium carbonate, magnesium hydroxide, magnesium carbonate, zinc oxide, zinc carbonate, aluminum oxide, aluminum hydroxide, among others. These may be used singly or at least two of them may be used in admixture.

The resulting PSA is applied to the release agent layer of a release liner or to a surface stock and dried to form an adhesive layer.

The viscosity of the PSA is not particularly limited and is adjusted to a range suited to the coater to be used, by addition of a thickening agent.

Coating machines usable for coating the release liner or surface stock with the adhesive are, for example, reverse roll coaters, knife coaters, air knife coaters, bar coaters, slot die coaters, lip coaters, reverse gravure coaters and the like, and the coating amount is preferably within the range of about 5-50 g/m², on a dry weight basis.

In the practice of the present invention, the surface stock is particularly limited to a polyvinyl chloride film. However, the surface stock also includes a multiple layers film which has a PVC layer being contacted with the adhesive and at least another layer selected from, for example, a woodfree paper, crepe paper, water-proof paper and neutralized paper, textiles such as synthetic textile wallpaper, films such as polyethylene films, polyester films, biaxially stretched polyester films, polypropylene films, polycarbonate films, polystyrene films, synthetic paper and nonwoven fabrics, and various coated sheets prepared by providing various coating layers on the above paper or film. Among these, surface stock is preferably one wherein PVC film is used as the support from the viewpoint of its cost, flexibility, graphic appeal, weather and chemical resistance, and transparency.

In the practice of the present invention, a primer layer may not be necessary between the surface stock and the adhesive layer. Furthermore, pre-treatment, for example, typically, corona treatment is not needed. The adhesive can directly provide excellent anchorage on the surface stock, and thus endow the adhesive sheet with clean removal property and better PMR performance, especially on highly monomeric plasticized PVC film, for example, a polyvinyl chloride film containing a plasticizer with a weight ratio of the plasticizer to the polyvinyl chloride of from 0.05 to 4. The plasticizer may be selected from 1,2-cyclohexanedicarboxylicacid esters such as 1,2-cyclohexanedicarboxylicacid diisononyl ester, and phthalate esters such as dioctyl phthalate, bis(2-ethylhexyl) phthalate, bis(n-butyl) phthalate, diisononyl phthalate, diisooctyl phthalate, and mixtures thereof.

Usable as the release liner in the present invention are high-density base paper such as glassine paper, clay-coated paper, kraft paper, polymer-laminated paper such as polyethylene-laminated woodfree paper, films and the like, respectively provided with a release agent layer formed by application of a fluorine-containing resin or silicone resin which is conventionally used for preparing a release liner of adhesive sheets, in an amount of about 0.05-3 g/m² on a dry weight basis, followed by heat-curing, by ionizing radiation curing or by other curing methods. Application machines usable for that purpose are, for example, multistage roll coaters, air knife coaters, bar coaters, offset gravure coaters, direct gravure coaters and the like.

In the practice of the present invention, there is no particular restriction on the method of constructing the clean removable adhesive sheet. Following the conventional method, the adhesive is applied to the release agent layer of a release liner or to the surface stock and dried. A surface stock is placed on the thus-formed adhesive layer for finishing.

The clean removable adhesive sheet according to the present invention thus prepared is used in a wide variety of ways, for example, as indoor or outdoor usage of graphic poster on bus, glass wall, paint wall or steel panel. For use, a poster (adhesive layer+ surface stock) is peeled off from the release liner and attached to a surface.

When the graphic sheet is ready for replacement (for example, because the message conveyed in an advertizing poster is at the end of its useful life), the old sheet is easily peeled off and discarded. New posters can then be applied to the surface.

In the present specification, the technical features in each preferred technical solution and more preferred technical solution can be combined with each other to form new technical solutions unless indicated otherwise. For briefness, the Applicant omits the descriptions for these combinations. However, all the technical solutions obtained by combing these technical features should be deemed as being literally described in the present specification in an explicit manner.

### Examples

In the examples, part(s), proportions and amounts are expressed on solid weight basis (namely, calculated as the weight of the solids), and percentages are all by weight unless otherwise specified.

The method of adhesive production and the testing method of performance, which were used in producing the removable adhesive sheets of Examples and Comparative Examples are described below. All the measurements were performed in a controlled environment (22-24 °C, 45-55% relative humidity) testing laboratory unless otherwise specified.

### I. Raw Materials

| A) Starting materials used in PSA backed PVC film | | | |
|---|---|---|---|
| Material | Function | Chemical nature | Supplier |
| Polyvinyl chloride film | Surface stock | Plasticized Polyvinyl chloride | RENOLIT product |
| Release liner | Release layer in laminate | Glassine or PEK liner | SUZHOU JIUHENG MATERIAL CO. LTD. |
| AEROSOL™ OT-75 | Wetting agent | Anionic surfactant | Cytec product |
| ACRYSOL™ TT-615 | Thickener | Acrylic polymer | Dow product |
| ROBOND™ PS-8942 | Water-based PSA | Acrylic polymer | Dow product |

| | | | |
|---|---|---|---|
| AA: acrylic acid AM: acrylamide AN: acrylonitrile BA: butyl acrylate EA: ethyl acrylate EHA: 2-ethylhexyl acrylate Sty: Styrene | | | |

### II. Test Methods

Sample preparation: The water based adhesive and a PVC film were used without any pre-treatment. The adhesive was coated to a release liner in an amount of 25 g/m² on dry weight basis and dried. The release liner therefore had the resulting adhesive layer thereon. The PVC film was laminated with the PSA coated release liner in such a manner that the adhesive layer was in contact with the rough side of said PVC to give a removable adhesive sheet.

Performance testing was conducted after the adhesive sheet was conditioned in a controlled environment (22-24 °C, 45-55% relative humidity) testing laboratory for at least overnight.

Shear resistance test: FINAT Test Method No. 8 for shear resistance test. (FINAT= Féderation Internationale des fabricants et transformateurs d' Adhésifs et Thermocollants).

Loop Tack Test: Samples were tested on stainless steel test plates according to FINAT Test Method No. 9.

Peel Strength Test: FINAT Test Method No. 1 for peel strength test at 180°. Before testing, the sample strip (formulated without wax) was applied to test plate for dwell time of 20 minutes and 7 days respectively. In the 7 days preceding, the bonded joints were stored in the controlled environment testing laboratory.

Plasticizer migration resistance performance was expressed as peel adhesion (180°) of test strips which were pre-aged in oven at 70°C for 7days.

Removability was evaluated by failure mode in peeling testing (180°) of strip from stainless steel panel, wherein the bonded joints were pre-aged in the condition of 80°C for 1 day and 4 days, respectively. If any of the adhesive was transferred to stainless steel panel after peeling, the removability was recorded as "fail". If the adhesive was removed from stainless steel panel after peeling, the removability was recorded as "pass".

### Example 1-5 and Comparative Example 6-7

Emulsion copolymers of Example 1-5 and Comparative Example 6-7 were prepared by copolymerizing of the monomers listed in Table 1 according to the teachings of U.S. Patent No. 5,451,432.

The emulsion copolymers were formulated with AEROSOL™ OT-75, NH₃ and AEROSOL™ TT-615 based on the formulations in Table 2 to prepare water based adhesives (denoted as A 1-5 and CA 6-7, respectively).

Seven groups of adhesive sheets were prepared by using PVC supporting films backed with adhesives A 1-5 and CA 6-7, respectively. The resulting adhesive sheets were denoted as S 1-5 and CS 6-7. The performances of the adhesive sheets were measured and shown in Table 3.

**Table 1. Copolymer compositions**

| Example No. | Monomer composition (wt%) |
|---|---|
| 1 | 6AN, 66.5EHA, 23EA, 2.5Sty, 1AM and 1AA |
| 2 | 6AN, 62EHA, 30EA, 1AM and 1AA |
| 3 | 6AN, 64EHA, 27EA, 1Sty, 1AM and 1AA |
| 4 | The same as Example 2 |
| 5 | The same as Example 2 |
| 6 | 8AN, 72EHA, 15.2EA, 2.5Sty and 2.3AA |
| 7 | 6AN, 63EHA, 8.5BA, 18EA, 2.5Sty, 1AM and 1AA |

**Table 2. Formulation of water based adhesives**

| Component | Example 1-3 and Comparative Example 6-7 (g) | Example 4 (g) | Example 5 (g) |
|---|---|---|---|
| Emulsion copolymer | 200 | 160 | 180 |
| ROBOND™ PS-8942 | 0 | 40 | 20 |
| AEROSOL™ OT-75 | 1.375 | 1.375 | 1.375 |
| NH₃ | 0.9 | 0.9 | 0.9 |
| AEROSOL™ TT-615 | 0.375 | 0.375 | 0.375 |
| pH | 8~9 | 8~9 | 8~9 |
| Viscosity | 800~2000 | 800~2000 | 800~2000 |

**Table 3. Performance test results**

| Adhesive sheet | Tack (N/in²) | Peel (N/in) 20min/7days | Shear(hrs) | PMR(N/in) | Removability |
|---|---|---|---|---|---|
| S1 | 7.9 | 11.1/16.3 | 197 | 1.8 | Pass |
| S2 | 8.0 | 11.6/16.0 | 169 | 2.7 | Pass |
| S3 | 5.5 | 9.8/17.7 | >200 | 3.1 | Pass |
| S4 | 8.0 | 11.0/16.0 | 104 | 2.6 | Pass |
| S5 | 8.0 | 11.0/16.0 | 158 | 2.4 | Pass |
| CS6 | 7.4 | 10.7/18.8 | >200 | 0.7 | Fail |
| CS7 | 7.6 | 10.9/15.5 | >200 | 1.2 | Pass |
| Threshold | ≥5.5 | 6.0-12.0/10.0-18.0 | ≥100 | ≥1.8 | Pass |

## Claims

1. A polyvinyl chloride film backed with water based pressure sensitive adhesive, wherein said pressure sensitive adhesive comprises a copolymer by copolymerization of a monomer mixture comprising, in percentage by weight based on the dry weight of the copolymer,
a) from 30wt% to less than 70wt% acrylic acid C4-C8-alkylester, and
b) from 2wt% to 9wt% (meth)acrylonitrile,
wherein the polyvinyl chloride film is not corona treated.

2. The polyvinyl chloride film according to claim 1, wherein the monomer mixture further comprises monomer(s) selected from the group (meth)acrylic acid C1-C3-alkylester, monomer having at least one amide group, monomer having at least one carboxyl or carboxylic anhydride group, monomer having at least one hydroxyl group, and mixtures thereof.

3. The polyvinyl chloride film according to claim 2, wherein the monomer mixture further comprises, in percentage by weight based on the dry weight of the copolymer, from 0.1wt% to 50wt% ethyl(meth)acrylate, from 0.1wt% to 10wt% acryl(meth)amide, from 0.1wt% to 10wt% carboxylic acid or carboxylic anhydride.

4. The polyvinyl chloride film according to claim 1, wherein the monomer mixture further comprises, in percentage by weight based on the dry weight of the copolymer, from 0.1wt% to 10wt% styrenic monomer.

5. The polyvinyl chloride film according to claim 1, wherein the monomer a) is selected from n-butyl (meth)acrylate, iso-butyl (meth)acrylate, hexyl (meth)acrylate, 2-ethylhexyl (meth)acrylate, and mixtures thereof.

6. The polyvinyl chloride film according to claim 1, wherein the amount of monomer b) is from 3wt% to 8wt%, based on the dry weight of the copolymer.

7. The polyvinyl chloride film according to claim 6, wherein the amount of monomer b) is from 4wt% to 7wt%, based on the dry weight of the copolymer.

8. The polyvinyl chloride film according to claim 1, wherein the polyvinyl chloride film also comprises a plasticizer with a weight ratio of the plasticizer to polyvinyl chloride from 0.05 to 4.

9. The polyvinyl chloride film according to claim 8, wherein the plasticizer is selected from phthalate esters and 1,2-cyclohexanedicarboxylicacid esters.

10. The polyvinyl chloride film according to claim 9, wherein the phthalate ester plasticizer is selected from 1,2-cyclohexanedicarboxylicacid diisononyl ester, dioctyl phthalate, bis(2-ethylhexyl) phthalate, bis(n-butyl) phthalate, diisononyl phthalate, diisooctyl phthalate, and mixtures thereof.

## Patentansprüche

1. Eine mit Kontaktklebstoff auf Wasserbasis hinterlegte Polyvinylchloridfolie, wobei der Kontaktklebstoff durch Copolymerisation einer Monomermischung ein Copolymer beinhaltet, wobei die Monomermischung, in Gewichtsprozent basierend auf dem Trockengewicht des Copolymers, Folgendes beinhaltet:
a) von 30 Gew.-% bis weniger als 70 Gew.-% Acrylsäure-C4-C8-alkylester, und
b) von 2 Gew.-% bis 9 Gew.-% (Meth)acrylnitril,
wobei die Polyvinylchloridfolie nicht coronabehandelt ist.

2. Polyvinylchloridfolie gemäß Anspruch 1, wobei die Monomermischung ferner ein Monomer/Monomere beinhaltet, ausgewählt aus der folgenden Gruppe: (Meth)acrylsäure-C1-C3-Alkylester, Monomer mit mindestens einer Amidgruppe, Monomer mit mindestens einer Carboxyl- oder Carboxylanhydridgruppe, Monomer mit mindestens einer Hydroxylgruppe und Mischungen davon.

3. Polyvinylchloridfolie gemäß Anspruch 2, wobei die Monomermischung ferner, in Gewichtsprozent basierend auf dem Trockengewicht des Copolymers, Folgendes beinhaltet: von 0,1 Gew.-% bis 50 Gew.-% Ethyl(meth)acrylat, von 0,1 Gew.-% bis 10 Gew.-% Acryl(meth)amid, von 0,1 Gew.-% bis 10 Gew.-% Carbonsäure oder Carboxylanhydrid.

4. Polyvinylchloridfolie gemäß Anspruch 1, wobei die Monomermischung ferner, in Gewichtsprozent basierend auf dem Trockengewicht des Copolymers, von 0,1 Gew.-% bis 10 Gew.-% Styrenmonomer beinhaltet.

5. Polyvinylchloridfolie gemäß Anspruch 1, wobei das Monomer a) aus n-Butyl(meth)acrylat, Isobutyl(meth)acrylat, Hexyl(meth)acrylat, 2-Ethylhexyl(meth)acrylat und Mischungen davon ausgewählt ist.

6. Polyvinylchloridfolie gemäß Anspruch 1, wobei die Menge an Monomer b) von 3 Gew.-% bis 8 Gew.-%, basierend auf dem Trockengewicht des Copolymers, beträgt.

7. Polyvinylchloridfolie gemäß Anspruch 6, wobei die Menge an Monomer b) von 4 Gew.-% bis 7 Gew.-%, basierend auf dem Trockengewicht des Copolymers, beträgt.

8. Polyvinylchloridfolie gemäß Anspruch 1, wobei die Polyvinylchloridfolie auch einen Weichmacher mit einem Gewichtsverhältnis des Weichmachers zu Polyvinylchlorid von 0,05 bis 4 beinhaltet.

9. Polyvinylchloridfolie gemäß Anspruch 8, wobei der Weichmacher aus Phtalatestern und 1,2-Cyclohexandicarbonsäureestern ausgewählt ist.

10. Polyvinylchloridfolie gemäß Anspruch 9, wobei der Phtalatester-Weichmacher aus Folgenden ausgewählt ist: 1,2-Cyclohexandicarbonsäurediisononylester, Dioctylphthalat, Bis(2-ethylhexyl)phthalat, Bis(n-butyl)phthalat, Diisononylphthalat, Diisooctylphthalat und Mischungen davon.

## Revendications

1. Un film de polychlorure de vinyle renforcé avec un adhésif sensible à la pression à base d'eau, dans lequel ledit adhésif sensible à la pression comprend un copolymère par copolymérisation d'un mélange de monomères comprenant, en pourcentage en poids rapporté au poids sec du copolymère,
a) de 30 % en poids à moins de 70 % en poids d'alkylester C4-C8 d'acide acrylique, et
b) de 2 % en poids à 9 % en poids de (méth)acrylonitrile,
dans lequel le film de polychlorure de vinyle n'est pas traité par décharge corona.

2. Le film de polychlorure de vinyle selon la revendication 1, dans lequel le mélange de monomères comprend en outre un ou des monomères sélectionnés dans le groupe alkylester C1-C3 d'acide (méth)acrylique, un monomère ayant au moins un groupe amide, un monomère ayant au moins un groupe anhydride carboxyle ou carboxylique, un monomère ayant au moins un groupe hydroxyle, et des mélanges de ceux-ci.

3. Le film de polychlorure de vinyle selon la revendication 2, dans lequel le mélange de monomères comprend en outre, en pourcentage en poids rapporté au poids sec du copolymère, de 0,1 % en poids à 50 % en poids d'éthyl(méth)acrylate, de 0,1 % en poids à 10 % en poids d'acryl(méth)amide, de 0,1 % en poids à 10 % en poids d'acide carboxylique ou d'anhydride carboxylique.

4. Le film de polychlorure de vinyle selon la revendication 1, dans lequel le mélange de monomères comprend en outre, en pourcentage en poids rapporté au poids sec du copolymère, de 0,1 % en poids à 10 % en poids de monomère styrène.

5. Le film de polychlorure de vinyle selon la revendication 1, dans lequel le monomère a) est sélectionné parmi n-butyle (méth)acrylate, iso-butyle (méth)acrylate, hexyle (méth)acrylate, 2-éthylhexyle (méth)acrylate et des mélanges de ceux-ci.

6. Le film de polychlorure de vinyle selon la revendication 1, dans lequel la quantité de monomère b) est de 3 % en poids à 8 % en poids, rapporté au poids sec du copolymère.

7. Le film de polychlorure de vinyle selon la revendication 6, dans lequel la quantité de monomère b) est de 4 % en poids à 7 % en poids, rapporté au poids sec du copolymère.

8. Le film de polychlorure de vinyle selon la revendication 1, le film de polychlorure de vinyle comprenant également un plastifiant avec un rapport de poids entre le plastifiant et le polychlorure de vinyle de 0,05 à 4.

9. Le film de polychlorure de vinyle selon la revendication 8, dans lequel le plastifiant est sélectionné parmi les esters phtalate et les esters d'acide 1,2-cyclohexanedicarboxylique.

10. Le film de polychlorure de vinyle selon la revendication 9, dans lequel le plastifiant d'ester phtalate est sélectionné parmi ester diisonylique d'acide 1,2-cyclohexanedicarboxylique, phtalate de dioctyle, phtalate de bis(2-éthylhexyle), phtalate de bis(n-butyle), phtalate de diisononyl, phtalate de diisooctyl, et des mélanges de ceux-ci.
